# EUROPEAN PATENT SPECIFICATION

(11) **EP 2 871 825 B1**
(45) Date of publication and mention of the grant of the patent: **28.12.2022**
(21) Application number: 13829756.9
(22) Date of filing: 15.08.2013
(51) Int. Cl.: H04M 1/725, G04G 13/02

(54) **METHOD FOR ENABLING SHUTDOWN ALARM CLOCK AND MOBILE TERMINAL**
VERFAHREN ZUR AKTIVIERUNG EINER ABSCHALTUNG EINES WECKERS UND MOBILES ENDGERÄT
PROCÉDÉ POUR PERMETTRE L'ARRÊT D'UN RÉVEIL, ET TERMINAL MOBILE

(30) Priority: 15.08.2012 CN 201210291619
(43) Date of publication of application: 13.05.2015
(73) Proprietor: Xiaomi Inc., Beijing 100085 (CN)
(72) Inventor: GU, Linghua, Beijing 100085 (CN); LIU, Anyu, Beijing 100085 (CN); QI, Dongjie, Beijing 100085 (CN); LIU, Xinyu, Beijing 100085 (CN)
(74) Representative: Millburn, Julie Elizabeth
(86) International application number: PCT/CN2013/081526
(87) International publication number: WO 2014/026620

(56) References cited:
- WO-A2-2009/148472
- CN-A- 1 749 887
- CN-A- 101 360 290
- CN-A- 102 821 207
- US-A1- 2001 031 651

## Description

### TECHNICAL FIELD

The present disclosure generally relates to the field of mobile terminal technology, and more particularly, to a method and a mobile terminal for implementing a shutdown alarm clock.

### BACKGROUND

With the development of the mobile communication technology, the popularity of the mobile communication terminals and the increasing enhancement of their functions, mobile terminals such as mobile phones have already become a kind of communication tool indispensible for people's daily lives.

An alarm clock of a mobile phone (a cordless telephone) is a commonly used function. Currently, most mobile phones have shutdown alarm clock function, while some mobile phones do not implement shutdown alarm clock function yet. For example, US 2001/031651 A1 discloses a portable telephone comprising manual keys, a power-on time memory portion for storing the power-on time being input by the manipulation of the key, a power-on time detection portion for detecting whether the time stored in the power-on time memory portion comes, a validation/invalidation memory portion for storing the validation/invalidation of the automatic power-on function set input by the key manipulation, a main control portion for turning on the power upon detecting the power-on time coming only when the validation of the automatic power-on function set is stored in the validation/invalidation memory portion.

Existing shutdown alarm clocks are basically implemented with a local RTC (Real time clock). Specifically, there are two implementing manners: one manner is by adding a specialized chip to a baseband chip for timing, and communicating time information with a processor; and the other manner is by counting pulses generated by an oscillation circuit inside a baseband chip.

However, most existing mobile phones employ Android systems, in which a function of waking up an alarm clock in a shutdown state cannot be implemented.

### SUMMARY

The present disclosure provides a method and a mobile terminal for implementing a shutdown alarm clock, according to independent claims 1 and 7. A computer program for executing the method of claims 1-6 is defined in independent claim 11. Preferred embodiments are defined in dependent claims 2-6 and 8-10.

The present disclosure also provides a computer program which, when being executed on a processor of a device, performs any one of the above methods.

The method and the mobile terminal for implementing a shutdown alarm clock provided by the present disclosure have the following advantageous effects.

Through the present disclosure, a function of ringing an alarm clock in a shutdown state is implemented in an android system, so as to improve the user experience, and to lengthen the life of the battery and reduce the consumption of the mobile phone.

### BRIEF DESCRIPTION OF THE DRAWINGS

In order to illustrate the technical solutions of the embodiments of the present disclosure more clearly, a brief introduction to the accompany drawings which may be used in the description of the related art or the embodiments may be given hereinafter. Apparently, the drawings in the description below are merely for illustrating some embodiments of the present disclosure, and other drawings may be obtained by those skilled in the art according to these drawing.
Fig.1 is a flow chart showing a method for implementing a shutdown alarm clock according to a first embodiment of the present disclosure;
Fig.2 is a flow chart specifically showing the step 4 of the implementing method according to the first embodiment of the present disclosure;
Fig.3 is a block diagram showing a mobile terminal according to the first embodiment of the present disclosure;
Fig.4 is a block diagram showing a mobile terminal according to a second embodiment of the present disclosure;
Fig.5 is a block diagram showing a mobile terminal according to a third embodiment of the present disclosure; and
Fig.6 is a block diagram showing a mobile terminal according to a fourth embodiment of the present disclosure.

### DETAILED DESCRIPTION

Hereinafter, a method and a mobile terminal for implementing a shutdown alarm clock provided by the present disclosure will be described in detail with reference to the accompany drawings and embodiments.

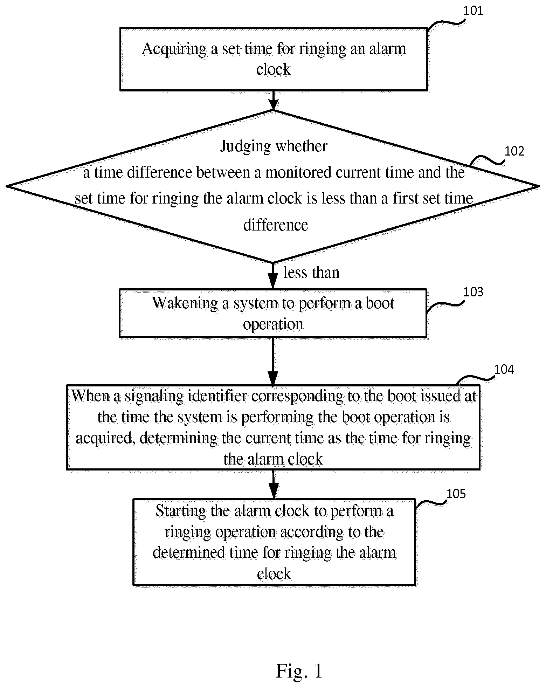

A method for implementing a shutdown alarm clock is provided by an embodiment of the present disclosure, as shown in Fig.1, the method includes the following steps.

In step 101, a set time for ringing an alarm clock is acquired.

In step 102, it is determined whether a time difference between a monitored current time and the set time for ringing the alarm clock is less than a first set time difference.

If it is determined that the time difference is less than the first set time difference, a step 103 is to be performed.

In step 103, a system is wakened to perform a boot operation.

When a signaling identifier corresponding to the boot issued at the time the system is performing the boot operation is acquired, a step 104 is to be performed.

In step 104, the current time is determined as the time for ringing the alarm clock.

In step 105, the alarm clock is started to perform a ringing operation according to the determined time for ringing the alarm clock.

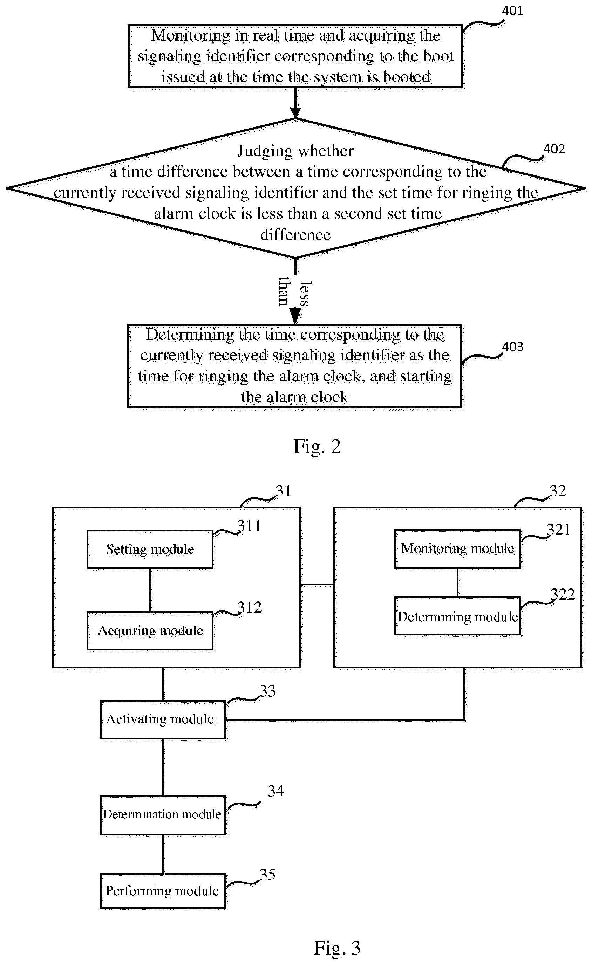

As shown in Fig.2, during performing the step 104, the current time being determined as the time for ringing the alarm clock when the signaling identifier corresponding to the boot issued at the time the system is performing the boot is monitored, specifically includes the following steps.

In step 401, the signaling identifier corresponding to the boot issued at the time the system is performing the boot is monitored in real time and acquired.

In step 402, it is determined whether a time difference between a time corresponding to the currently received signaling identifier and the set time for ringing the alarm clock is less than a second set time difference.

If it is determined that the time difference is less than the second set time difference, a step 403 is to be performed.

In step 403, the time corresponding to the currently received signaling identifier is determined as the time for ringing the alarm clock, and the alarm clock is started.

Preferably, during performing the step 403, the time corresponding to the currently received signaling identifier is determined as the time for ringing the alarm clock if it is determined that the time difference is less than the second set time difference, and the method further includes:
searching for a state identifier corresponding to a time which is less than the time corresponding to the currently received signaling identifier by a second set time; and
if it is determined that the state identifier corresponding to the time which is less than the time corresponding to the currently received signaling identifier by the second set time is an identifier for starting the alarm clock, determining the time to which the state identifier corresponds as the time for ringing the alarm clock.

In the method provided by the present disclosure, the time for ringing the alarm clock is set in a powered on state, for example, a time to for ringing the alarm clock is set as 9:00 AM, from Monday to Friday of every week, and a set ring tone is copied from a SD card to a storing module of the system. This is because the SD card is not activated when the system is wakened to perform the ringing operation of the alarm clock, and if the ring tone is stored on the SD card, the alarm clock will perform ringing without a set ring tone, but simply with a prompting sound of "beeping" or "ticking" originally set in the system. After the time for ringing the alarm clock is set, it is recorded and stored in the storing module of the system, and may be represented in a form of a table as follows:

| time | event label | state identifier | ... |
|---|---|---|---|
| 1:00 | alarm clock | 0 | ... |
| 1:20 | short message | 0 | ... |
| 1:30 | alarm clock | 1 | ... |
| ... | ... | ... | ... |

The triggered event label corresponding to the time for ringing is "alarm clock", and the state identifier is on or off. The state is switched to be "on" at the set time for ringing the alarm clock, and the state identifier may be "0" or "1" representing "off" or "on". Firstly, the set time to for ringing the alarm clock is acquired, and then the relationship between a current time t₁ and the set time to for ringing the alarm clock is determined according to the monitored current time t₁. If it is determined that the time to for ringing the alarm clock is reached, a time difference between the current time t₁ and the set time to for ringing the alarm clock is 0, and is definitely less than a first set time difference Δt₁ which is generally set as 5 minutes. As long as the current time t₁ is within 5 minutes away from the set time to for ringing the alarm clock, the system may be wakened to perform a boot operation. Typically, in an android system, once the system is booted, a boot signaling identifier "boot.complete" will be issued, informing all the applications that the system is powered on. When a monitoring module monitors in real time and acquires the signaling identifier corresponding to the system boot, the current time t₂ when the signaling identifier is acquired is recorded. If it is monitored, before the boot, that the current time t₁ reaches the set time to for ringing the alarm clock, then t₂ definitely has a delay time from the set time for ringing the alarm clock, that is, t₂ is greater than the time to for ringing the alarm clock, because the boot typically takes some time and the boot time is different depending on a different mobile phone system.

Currently, after the boot, when the time at which the boot signaling identifier is acquired is determined as the set time for ringing the alarm clock, the alarm clock is started to perform a ringing operation.

However, since a signaling identifier will be issued every time the system is booted, it is further to be confirmed whether it is a time for ringing the alarm clock in a normal powered on state or a time for ringing the alarm clock in a shutdown state. That is to say:
in a table in the storing module of the system, the time recorded in the table which is less than the currently acquired system boot time t₂ by a second set time Δt₂ is queried. For example, the time at which the boot signaling identifier is currently acquired is 9:05, and a time 9:00 is recorded in the table, the time difference between which is less than the second set time Δt₂. It is further determined that the event label corresponding to the time 9:00 is "alarm clock" and the state is "on", so it is determined that the current time is a time for ringing the alarm clock in a shutdown state, hence the ringing operation is performed.

After the ringing operation is performed, the ringing needs to be turned off or optionally to be resumed. For example, if a user feels sleepy in the morning and not sober enough to be waken up, the alarm clock must function effectively, that is, the alarm clock should have to be turned off through the user's operation thereon, rather than a simple touch which cannot achieve the purpose of activating up. Therefore, in the embodiment of the present disclosure, the alarm clock may be turned off only by sliding a bar to a target region or by an operation along a set path. Generally, operations such as turning off the alarm clock and shutting down the device, and resuming ringing after a few minutes, may be set.

A first embodiment of the present disclosure provides a mobile terminal based on the method for implementing a shutdown alarm clock. As shown in Fig.3, the mobile terminal includes: a system control module 31, a timer 32, a activating module 33, a determination module 34 and a performing module 35. The system control module 31 specifically includes: a setting module 311, configured to set a time for ringing an alarm clock in a powered on state; and an acquiring module 312, configured to acquire the set time for ringing the alarm clock.

The timer 32 includes: a monitoring module 321, configured to monitor a current time; and a determining module 322, configured to determined whether a time difference between a monitored current time and the set time for ringing the alarm clock is less than a first set time difference.

In addition, the activating module 33 is configured to, if it is determined that the time difference is less than the first set time difference, waken a system to perform a boot operation.

The determination module 34 is configured to, when a signaling identifier corresponding to the boot issued at the time the system is performing the boot operation is acquired, determine the current time as the time for ringing the alarm clock.

The performing module 35 is configured to start the alarm clock to perform a ringing operation according to the determined time for ringing the alarm clock.

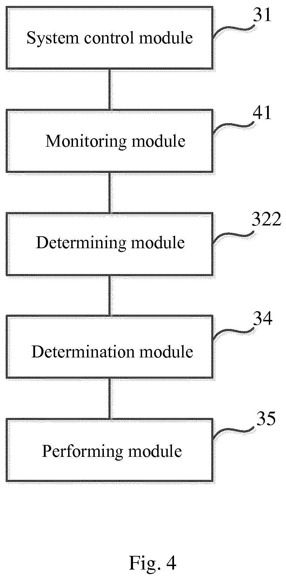

As shown in Fig.4, a mobile terminal provided by a second embodiment of the present disclosure further includes: a monitoring module 41, configured to monitor in real time and acquire the signaling identifier corresponding to the boot issued at the time when the system control module 31 controls the system to boot. Once the system is booted, a signaling identifier "boot.complete" will be issued by the system, informing all the applications that the system is powered on, so the signaling identifier may be monitored and acquired in real time to determine whether the system is currently in a powered on state.

The determining module 322 is further configured to determine whether a time difference between a time corresponding to the currently received signaling identifier and the set time for ringing the alarm clock is less than a second set time difference.

If it is determined that the time difference is less than the second set time difference, the determination module 34 is further configured to determine the time corresponding to the currently received signaling identifier as the time for ringing the alarm clock.

The performing module 35 is configured to start the alarm clock to perform a ringing operation according to the determined time for ringing the alarm clock.

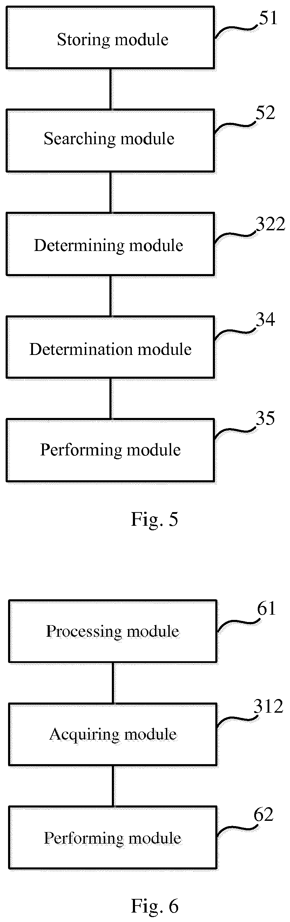

As shown in Fig.5, a system in a mobile terminal provided by a third embodiment of the present disclosure further includes:
a storing module 51, configured to store labels and state identifiers respectively corresponding to various set times;
a searching module 52, configured to search for a state identifier corresponding to a time which is less than the time corresponding to the currently received signaling identifier by a second set time; and
a determining module 322, configured to determine the state identifier corresponding to the time which is less than the time corresponding to the currently received signaling identifier by the second set time.

If it is determined that the state identifier corresponding to the time which is less than the time corresponding to the currently received signaling identifier by the second set time is an identifier for starting the alarm clock, the determination module 34 is further configured to determine the time to which the state identifier corresponds as the time for ringing the alarm clock, and the performing module 35 is configured to start the ringing operation.

Further, the storing module 51 provided in the system is configured to store a ring tone corresponding to the ringing of the alarm clock. The set ring tone for the alarm clock is copied to the storing module of the system from a SD card. This is because the SD card is not activated when the system is wakened to perform the ringing operation of the alarm clock, and if the ring tone is stored on the SD card, the alarm clock will perform ringing without a set ring tone, but simply with a prompting sound of "beeping" or "ticking" originally set in the system. After the time for ringing the alarm clock is set, it is recorded and stored in the storing module of the system.

As shown in Fig.6, a system in a mobile terminal provided by a fourth embodiment of the present disclosure further includes: a processing module 61 and a performing module 62, wherein, the processing module 61 is configured to process an operational instruction to handle the ringing;
the acquiring module 312 is configured to acquire the operational instruction to handle the ringing; and
the performing module 62 is configured to perform a resuming operation or a turning off operation to the ringing of the alarm clock, according to the operational instruction to handle the ringing.

The method and mobile terminal for implementing a shutdown alarm clock provided by the embodiments of the present disclosure have the following advantageous effects.

In the specific embodiments of the present disclosure, a activating module configured to waken the system to boot in a shutdown state, and a monitoring module which may monitor the powered on state or the shutdown state of the system in real time are provided. Since the monitoring module may monitor the current time in real time, when the monitoring module detects that the current time reaches a set time for the alarm clock, an instruction is issued to the activating module to waken the system to boot. It is determined whether the currently received system boot time is the set time for the alarm clock according to the determination result from the determination module; if it is determined as the time for the alarm clock, a ringing operation is performed. Through the present disclosure, a function of ringing an alarm clock in a shutdown state is implemented in an android system, so as to improve the user experience, and to lengthen the life of the battery and reduce the consumption of the mobile phone.

## Claims

1. A method for implementing a shutdown alarm clock in an android operating system, comprising:
acquiring a set time for ringing the alarm clock;
determining whether a time difference between a monitored current time and the set time for ringing the alarm clock is less than a first set time difference;
if it is determined that the time difference is less than the first set time difference, activating a system to perform a boot operation;
when a signaling identifier corresponding to the boot issued at the time the system is performing the boot operation is acquired, determining the current time as the time for ringing the alarm clock;
controlling the alarm clock to perform a ringing operation according to the determined time for ringing the alarm clock; and,
wherein, said step of determining the current time as the time for ringing the alarm clock, when a signaling identifier corresponding to the boot issued at the time the system is performing the boot operation in acquired, specifically comprises:
monitoring in real time and acquiring the signaling identifier corresponding to the boot issued at the time the system is booted;
determining whether a time difference between a time at which the current boot signaling identifier is acquired and the set time for ringing the alarm clock is less than a second set time difference; and
if it is determined that the time difference is less than the second set time difference, determining the time at which the current boot signaling identifier is acquired as the time for ringing the alarm clock, and starting the alarm clock.

2. The method for implementing a shutdown alarm clock according to claim 1, **characterized in that**, if it is determined that the time difference is less than the second set time difference, determining the time at which the current boot signaling identifier is acquired as the time for ringing the alarm clock, specifically comprises:
searching for a state identifier corresponding to a time which is less than the time at which the current boot signaling identifier is acquired by a second set time; and
if it is determined that the state identifier corresponding to the time which is less than the time at which the current boot signaling identifier is acquired by the second set time is an identifier for starting the alarm clock, determining the time to which the state identifier corresponds as the time for ringing the alarm clock.

3. The method for implementing a shutdown alarm clock according to claim 1, **characterized in that**, before acquiring the set time for ringing the alarm clock, the method further comprises:
setting the time for ringing the alarm clock in a powered on state; and storing a ring tone corresponding to the ringing of the alarm clock in a storing module of the system.

4. The method for implementing a shutdown alarm clock according to claim 1, **characterized in that**, after starting the alarm clock to perform the ringing operation according to the determined time for ringing the alarm clock, the method further comprises:
acquiring an operational instruction to handle the ringing; and
performing a resuming operation or a turning off operation to the ringing of the alarm clock, according to the operational instruction to handle the ringing.

5. The method for implementing a shutdown alarm clock according to claim 4, **characterized in that**, the acquiring an operational instruction to handle the ringing specifically is: sliding a set object between a set starting position and a target position.

6. The method for implementing a shutdown alarm clock according to claim 5, **characterized in that**, the operation of handling the ringing specifically is any one of: turning off the ringing, resuming the ringing, or turning off the ringing and shutting down the system.

7. A mobile terminal for implementing a shutdown alarm clock in an android operating system, comprising:
an acquiring module, configured to acquire a set time for ringing the alarm clock;
a determining module, configured to determined whether a time difference between a monitored current time and the set time for ringing the alarm clock is less than a first set time difference;
a activating module, configured to, if it is determined that the time difference is less than the first set time difference, waken a system to perform a boot operation;
a determination module, configured to, when a signaling identifier corresponding to the boot issued at the time the system is performing the boot operation is acquired, determine the current time as the time for ringing the alarm clock;
a performing module, configured to start the alarm clock to perform a ringing operation according to the determined time for ringing the alarm clock; and,
a monitoring module, configured to monitor in real time and acquire the signaling identifier corresponding to the boot issued at the time the system is booted;
wherein, the determining module is further configured to determine whether a time difference between a time at which the current boot signaling identifier is acquired and the set time for ringing the alarm clock is less than a second set time difference;
if it is determined that the time difference is less than the second set time difference, the determination module is further configured to determine the time at which the boot signaling identifier is acquired as the time for ringing the alarm clock; and
the performing module is configured to start the alarm clock to perform the ringing operation according to the determined time for ringing the alarm clock.

8. The mobile terminal according to claim 7, **characterized by** further comprising:
a storing module, configured to store labels and state identifiers respectively corresponding to various set times; and
a searching module, configured to search for a state identifier corresponding to a time which is less than the time at which the current boot signaling identifier is acquired by a second set time;
wherein, if it is determined that the state identifier corresponding to the time which is less than the time at which the current boot signaling identifier is acquired by the second set time is an identifier for starting the alarm clock, the determination module is further configured to determine the time to which the state identifier corresponds as the time for ringing the alarm clock.

9. The mobile terminal according to claim 7, **characterized in that**, the system of the mobile terminal further comprises:
a setting module, configured to set the time for ringing the alarm clock in a powered on state; wherein, a storing module is provided in the system, and is configured to store a ring tone corresponding to the ringing of the alarm clock.

10. The mobile terminal according to claim 7, **characterized in that**, the system further comprises:
a processing module, configured to process an operational instruction to handle the ringing;
an acquiring module, configured to acquire the operational instruction to handle the ringing; and
a performing module, configured to perform a resuming operation or a turning off operation to the ringing of the alarm clock, according to the operational instruction to handle the ringing.

11. A computer program which, when being executed on a processor of a device, causes the device to perform a method according to any one of claims 1 to 6.

## Patentansprüche

1. Verfahren zum Implementieren eines Abschaltweckers in einem Android-Betriebssystem, das Folgendes beinhaltet:
Erfassen einer eingestellten Zeit für das Klingeln des Weckers;
Bestimmen, ob eine Zeitdifferenz zwischen einer überwachten aktuellen Zeit und der eingestellten Zeit für das Klingeln des Weckers kleiner ist als eine erste eingestellte Zeitdifferenz;
wenn bestimmt wird, dass die Zeitdifferenz kleiner ist als die erste eingestellte Zeitdifferenz, Aktivieren eines Systems zum Durchführen eines Bootvorgangs;
wenn ein dem Booten entsprechender Signalisierungsbezeichner, der zur Zeit der Durchführung des Bootvorgangs durch das System ausgegeben wird, erfasst wird, Bestimmen der aktuellen Zeit als die Zeit für das Klingeln des Weckers;
Steuern des Weckers zum Durchführen eines Klingelvorgangs gemäß der bestimmten Zeit für das Klingeln des Weckers; und
wobei der genannte Schritt des Bestimmens der aktuellen Zeit als die Zeit für das Klingeln des Weckers, wenn ein dem Booten entsprechender Signalisierungsbezeichner, der zur Zeit der Durchführung des Bootvorgangs durch das System ausgegeben wird, erfasst wird, speziell Folgendes beinhaltet:
Überwachen in Echtzeit und Erfassen des dem Booten entsprechenden Signalisierungsbezeichners, der zur Zeit des Bootens des Systems ausgegeben wird;
Bestimmen, ob eine Zeitdifferenz zwischen einer Zeit, zu der der Signalisierungsbezeichner des aktuellen Bootens erfasst wird, und der eingestellten Zeit für das Klingeln des Weckers kleiner ist als eine zweite eingestellte Zeitdifferenz; und
wenn bestimmt wird, dass die Zeitdifferenz kleiner ist als die zweite eingestellte Zeitdifferenz, Bestimmen der Zeit, zu der der Signalisierungsbezeichner des aktuellen Bootens erfasst wird, als die Zeit für das Klingeln des Weckers und Starten des Weckers.

2. Verfahren zum Implementieren eines Abschaltweckers nach Anspruch 1, **dadurch gekennzeichnet, dass**, wenn bestimmt wird, dass die Zeitdifferenz kleiner ist als die zweite eingestellte Zeitdifferenz, Bestimmen der Zeit, zu der der Signalisierungsbezeichner des aktuellen Bootens erfasst wird, als die Zeit für das Klingeln des Weckers speziell Folgendes beinhaltet:
Suchen nach einem Zustandsbezeichner, der einer Zeit entspricht, die um eine zweite eingestellte Zeit kleiner ist als die Zeit, zu der der Signalisierungsbezeichner des aktuellen Bootens erfasst wird; und,
wenn bestimmt wird, dass der Zustandsbezeichner, der der Zeit entspricht, die um die zweite eingestellte Zeit kleiner ist als die Zeit, zu der der Signalisierungsbezeichner des aktuellen Bootens erfasst wird, ein Bezeichner zum Starten des Weckers ist, Bestimmen der Zeit, der der Zustandsbezeichner entspricht, als die Zeit für das Klingeln des Weckers.

3. Verfahren zum Implementieren eines Abschaltweckers nach Anspruch 1, **dadurch gekennzeichnet, dass** das Verfahren vor Erfassen der eingestellten Zeit für das Klingeln des Weckers ferner Folgendes beinhaltet:
Einstellen der Zeit für das Klingeln des Weckers in einem eingeschalteten Zustand; und
Speichern eines Klingeltons, der dem Klingeln des Weckers entspricht, in einem Speichermodul des Systems.

4. Verfahren zum Implementieren eines Abschaltweckers nach Anspruch 1, **dadurch gekennzeichnet, dass** das Verfahren nach Starten des Weckers zum Durchführen des Klingelvorgangs gemäß der vorbestimmten Zeit für das Klingeln des Weckers ferner Folgendes beinhaltet:
Erfassen einer Betriebsanweisung zur Abarbeitung des Klingelns; und
Durchführen eines Wiederaufnahmevorgangs oder eines Abschaltvorgangs an dem Klingeln des Weckers gemäß der Betriebsanweisung zur Abarbeitung des Klingelns.

5. Verfahren zum Implementieren eines Abschaltweckers nach Anspruch 4, **dadurch gekennzeichnet, dass** das Erfassen einer Betriebsanweisung zur Abarbeitung des Klingelns spezifisch Folgendes ist: Verschieben eines eingestellten Objekts zwischen einer eingestellten Startposition und einer Zielposition.

6. Verfahren zum Implementieren eines Abschaltweckers nach Anspruch 5, **dadurch gekennzeichnet, dass** der Vorgang der Abarbeitung des Klingelns spezifisch ein beliebiger der folgenden ist: Abstellen des Klingeins, Wiederaufnehmen des Klingelns oder Abstellen des Klingelns und Abschalten des Systems.

7. Mobiles Endgerät zum Implementieren eines Abschaltweckers in einem Android-Betriebssystem, das Folgendes beinhaltet:
ein Erfassungsmodul, das konfiguriert ist zum Erfassen einer eingestellten Zeit für das Klingeln des Weckers;
ein Bestimmungsmodul, das konfiguriert ist zum Bestimmen, ob eine Zeitdifferenz zwischen einer überwachten aktuellen Zeit und der eingestellten Zeit für das Klingeln des Weckers kleiner ist als eine erste eingestellte Zeitdifferenz;
ein Aktivierungsmodul, das konfiguriert ist zum Aufwecken eines System zum Durchführen eines Bootvorgangs, wenn bestimmt wird, dass die Zeitdifferenz kleiner ist als die erste eingestellte Zeitdifferenz;
ein Bestimmungsmodul, das konfiguriert ist zum Bestimmen der aktuellen Zeit als die Zeit für das Klingeln des Weckers, wenn ein dem Booten entsprechender Signalisierungsbezeichner, der zur Zeit der Durchführung des Bootvorgangs durch das System ausgegeben wird, erfasst wird;
ein Durchführungsmodul, das konfiguriert ist zum Starten des Weckers zum Durchführen eines Klingelvorgangs gemäß der bestimmten Zeit für das Klingeln des Weckers; und,
ein Überwachungsmodul, das konfiguriert ist zum Überwachen in Echtzeit und Erfassen des dem Booten entsprechenden Signalisierungsbezeichners, der zur Zeit des Bootens des Systems ausgegeben wird;
wobei das Bestimmungsmodul ferner konfiguriert ist zum Bestimmen, ob eine Zeitdifferenz zwischen einer Zeit, zu der der Signalisierungsbezeichner des aktuellen Bootens erfasst wird, und der eingestellten Zeit für das Klingeln des Weckers kleiner ist als die zweite eingestellte Zeitdifferenz;
wenn bestimmt wird, dass die Zeitdifferenz kleiner ist als die zweite eingestellte Zeitdifferenz, das Bestimmungsmodul ferner konfiguriert ist zum Bestimmen der Zeit, zu der der Signalisierungsbezeichner des aktuellen Bootens erfasst wird, als die Zeit für das Klingeln des Weckers; und
das Durchführungsmodul konfiguriert ist zum Starten des Weckers zum Durchführen des Klingelvorgangs gemäß der bestimmten Zeit für das Klingeln des Weckers.

8. Mobiles Endgerät nach Anspruch 7, **dadurch gekennzeichnet, dass** es ferner Folgendes beinhaltet:
ein Speichermodul, das konfiguriert ist zum Speichern von Kennzeichnungen und Zustandsbezeichnern, die jeweilig verschiedenen eingestellten Zeiten entsprechen; und
ein Suchmodul, das konfiguriert ist zum Suchen nach einem Zustandsbezeichner, der einer Zeit entspricht, die um eine zweite eingestellte Zeit kleiner ist als die Zeit, zu der der Signalisierungsbezeichner des aktuellen Bootens erfasst wird;
wobei, wenn bestimmt wird, dass der Zustandsbezeichner, der der Zeit entspricht, die um die zweite eingestellte Zeit kleiner ist als die Zeit, zu der der Signalisierungsbezeichner des aktuellen Bootens erfasst wird, ein Bezeichner zum Starten des Weckers ist, das Bestimmungsmodul ferner konfiguriert ist zum Bestimmen der Zeit, der der Zustandsbezeichner entspricht, als die Zeit für das Klingeln des Weckers.

9. Mobiles Endgerät nach Anspruch 7, **dadurch gekennzeichnet, dass** das System des mobilen Endgeräts ferner Folgendes beinhaltet:
ein Einstellmodul, das konfiguriert ist zum Einstellen der Zeit für das Klingeln des Weckers in einen eingeschalteten Zustand; wobei in dem System ein Speichermodul bereitgestellt ist und konfiguriert ist zum Speichern eines Klingeltons, der dem Klingeln des Weckers entspricht.

10. Mobiles Endgerät nach Anspruch 7, **dadurch gekennzeichnet, dass** das System ferner Folgendes beinhaltet:
ein Verarbeitungsmodul, das konfiguriert ist zum Verarbeiten einer Betriebsanweisung zur Abarbeitung des Klingelns;
ein Erfassungsmodul, das konfiguriert ist zum Erfassen der Betriebsanweisung zur Abarbeitung des Klingelns; und
ein Durchführungsmodul, das konfiguriert ist zum Durchführen eines Wiederaufnahmevorgangs oder eines Abschaltvorgangs an dem Klingeln des Weckers gemäß der Betriebsanweisung zur Abarbeitung des Klingeins.

11. Computerprogramm, das bei Ausführung in einem Prozessor einer Vorrichtung die Vorrichtung zum Durchführen eines Verfahrens nach einem der Ansprüche 1 bis 6 veranlasst.

## Revendications

1. Procédé de mise en œuvre d'un réveil arrêté dans un système d'exploitation Android, comprenant :
acquérir une heure réglée pour faire sonner le réveil ;
déterminer si une différence d'heure entre une heure courante surveillée et l'heure réglée pour faire sonner le réveil est moindre qu'une première différence d'heure réglée ;
s'il est déterminé que la différence d'heure est moindre que la première différence d'heure réglée, activer un système pour effectuer un opération d'amorçage ;
lorsqu'un identifiant de signalisation correspondant à l'amorçage émis à l'heure à laquelle le système effectue l'opération d'amorçage, est acquis, déterminer l'heure courante comme l'heure pour faire sonner le réveil ;
commander au réveil d'effectuer une opération de sonnerie conformément à l'heure déterminée pour faire sonner le réveil ; et
dans lequel, ladite étape consistant à déterminer l'heure courante comme l'heure pour faire sonner le réveil, lorsqu'un identifiant de signalisation correspondant à l'amorçage émis à l'heure à laquelle le système effectue l'opération d'amorçage est acquis,
comprend spécifiquement :
surveiller en temps réel et acquérir l'identifiant de signalisation correspondant à l'amorçage émis à l'heure à laquelle le système est amorcé ;
déterminer si une différence d'heure entre une heure à laquelle l'identifiant de signalisation d'amorçage courant est acquis et l'heure réglée pour faire sonner le réveil est moindre qu'une deuxième différence d'heure réglée ; et
s'il est déterminé que la différence d'heure est moindre que la deuxième différence d'heure réglée, déterminer l'heure à laquelle l'identifiant de signalisation d'amorçage courant est acquis comme l'heure pour faire sonner le réveil, et déclencher le réveil.

2. Procédé de mise en œuvre d'un réveil arrêté selon la revendication 1,
**caractérisé en ce que**, s'il est déterminé que la différence d'heure est moindre que la deuxième différence d'heure réglée, déterminer l'heure à laquelle l'identifiant de signalisation d'amorçage courant est acquis comme l'heure pour faire sonner le réveil, comprend spécifiquement :
rechercher un identifiant d'état correspondant à une heure qui est moindre que l'heure à laquelle l'identifiant de signalisation d'amorçage courant est acquis par une deuxième heure réglée ; et
s'il est déterminé que l'identifiant d'état correspondant à l'heure qui est moindre que l'heure à laquelle l'identifiant de signalisation d'amorçage courant est acquis par la deuxième heure réglée est un identifiant pour déclencher le réveil, déterminer l'heure à laquelle l'identifiant d'état correspond comme l'heure pour faire sonner le réveil.

3. Procédé de mise en œuvre d'un réveil arrêté selon la revendication 1, **caractérisé en ce que**, avant d'acquérir l'heure réglée pour faire sonner le réveil, le procédé comprend en outre :
régler l'heure pour faire sonner le réveil dans un état mis sous tension ; et stocker un timbre de sonnerie correspondant à la sonnerie du réveil dans un module de stockage du système.

4. Procédé de mise en œuvre d'un réveil arrêté selon la revendication 1, **caractérisé en ce que**, après avoir déclenché le réveil pour effectuer l'opération de sonnerie conformément à l'heure déterminée pour faire sonner le réveil, le procédé comprend en outre :
acquérir une instruction opérationnelle pour gérer la sonnerie ; et
effectuer une opération de reprise ou une opération de coupure sur la sonnerie du réveil, conformément à l'instruction opérationnelle pour gérer la sonnerie.

5. Procédé de mise en œuvre d'un réveil arrêté selon la revendication 4, **caractérisé en ce que**, l'acquisition d'une instruction opérationnelle pour gérer la sonnerie est spécifiquement : de glisser un objet consigné entre une position de déclenchement réglée et une position cible.

6. Procédé de mise en œuvre d'un réveil arrêté selon la revendication 5, **caractérisé en ce que**, l'opération de gestion de la sonnerie est spécifiquement l'une quelconque d'entre couper la sonnerie, reprendre la sonnerie ou couper la sonnerie et arrêter le système.

7. Terminal mobile pour mettre en œuvre un réveil arrêté dans un système d'exploitation Android, comprenant :
un système d'acquisition, configuré pour acquérir une heure réglée pour faire sonner le réveil ;
un module de détermination, configuré pour déterminer si une différence d'heure entre une heure courante surveillée et l'heure réglée pour faire sonner le réveil est moindre qu'une première différence d'heure réglée ;
un module d'activation, configuré pour, s'il est déterminé que la différence d'heure est moindre que la première différence d'heure réglée, réveiller un système pour effectuer une opération d'amorçage ;
un module de détermination, configuré pour, lorsqu'un identifiant de signalisation correspondant à l'amorçage émis à l'heure à laquelle le système effectue l'opération d'amorçage, est acquis, déterminer l'heure courante comme l'heure pour faire sonner le réveil ;
un module d'exécution, configuré pour déclencher le réveil pour effectuer une opération de sonnerie conformément à l'heure déterminée pour faire sonner le réveil ; et
un module de surveillance, configuré pour surveiller en temps réel et acquérir l'identifiant de signalisation correspondant à l'amorçage émis à l'heure à laquelle le système est amorcé ;
dans lequel, le module de détermination est configuré en outre pour déterminer si une différence d'heure entre une heure à laquelle l'identifiant de signalisation d'amorçage courant est acquis et l'heure réglée pour faire sonner le réveil, est moindre qu'une deuxième différence d'heure réglée ;
s'il est déterminé que la différence d'heure est moindre que la deuxième différence d'heure réglée, le module de détermination est configuré en outre pour déterminer l'heure à laquelle l'identifiant de signalisation d'amorçage est acquis comme l'heure pour faire sonner le réveil ; et
le module d'exécution est configuré pour déclencher le réveil pour effectuer l'opération de sonnerie conformément à l'heure déterminée pour faire sonner le réveil.

8. Terminal mobile selon la revendication 7, caractérisé en comprenant en outre :
un module de stockage, configuré pour stocker des étiquettes et des identifiants d'état correspondant respectivement à diverses heures réglées ; et
un module de recherche, configuré pour rechercher un identifiant d'état correspondant à une heure qui est moindre que l'heure à laquelle l'identifiant de signalisation d'amorçage courant est acquis par une deuxième heure réglée ;
dans lequel, s'il est déterminé que l'identifiant d'état correspondant à l'heure qui est moindre que l'heure à laquelle l'identifiant de signalisation d'amorçage courant est acquis par la deuxième heure réglée est un identifiant pour déclencher le réveil, le module de détermination est configuré en outre pour déterminer l'heure à laquelle l'identifiant d'état correspond comme l'heure pour faire sonner le réveil ;

9. Terminal mobile selon la revendication 7, **caractérisé en ce que**, le système du terminal mobile comprend en outre :
un module de réglage, configuré pour régler l'heure pour faire sonner le réveil dans un état mis sous tension ; dans lequel, un module de stockage est fourni dans le système, et est configuré pour stocker un timbre de sonnerie correspondant à la sonnerie du réveil.

10. Terminal mobile selon la revendication 7, **caractérisé en ce que**, le système comprend en outre :
un module de traitement, configuré pour traiter une instruction opérationnelle pour gérer la sonnerie ;
un module d'acquisition, configuré pour acquérir l'instruction opérationnelle pour gérer la sonnerie ; et
un module d'exécution, configuré pour effectuer une opération de reprise ou une opération de coupure sur la sonnerie du réveil, conformément à l'instruction opérationnelle pour gérer la sonnerie.

11. Programme informatique qui, lorsque exécuté sur un processeur d'un dispositif, fait que le dispositif effectue un procédé selon l'une quelconque des revendications 1 à 6.
